# EUROPEAN PATENT APPLICATION

(11) **EP 4 488 895 A1**
(43) Date of publication of application: **08.01.2025**
(21) Application number: 23183176.9
(22) Date of filing: 03.07.2023
(51) Int. Cl.: G06Q 10/04, G06Q 50/06

(54) **COMPUTER-IMPLEMENTED METHOD FOR DETERMINING AN ENERGY LOAD DISTRIBUTION IN A SYSTEM**

(71) Applicant: ABB SCHWEIZ AG, 5400 Baden (CH)
(72) Inventor: PRIMAS, Bernhard, 68165 Mannheim (DE); KOTRIWALA, Arzam Muzaffar, 68526 Ladenburg (DE); SCHLOEDER, Matthias, 69126 Heidelberg (DE); BISKOPING, Matthias, 69493 Hirschberg (DE); GUTERMUTH, Georg, 69115 Heidelberg (DE)
(74) Representative: Maiwald GmbH

(57) **Abstract**

Computer-implemented method for determining an energy load distribution in a system, comprising: receiving total energy load data of the system, wherein the total energy load data comprises individual energy load data of a plurality of assets; determining at least one energy load peak in the total energy load data; disaggregating the total energy load data into the individual energy load data of the plurality of assets; providing the disaggrateted individual energy load data of the plurality of assets for further processing.

## Description

### FIELD OF INVENTION

The present invention relates to a computer implemented method for determining an energy load distribution in a system, to a use of disaggrateted individual energy load data of a plurality of assets in an energy management system, to a use of disaggrateted individual energy load data of a plurality of assets on a graphical user interface, to a data processing system, to a computer program product and to a computer readable medium.

### BACKGROUND OF THE INVENTION

Energy consumption of a building or energy demand of a building play a key role in terms of an efficiency consideration of running building. The building may be commercial, residential, and/or industrial building. Energy management systems for such buildings are well known in the state-of the art and deal with a plurality of different entities in such a building.

It has now become apparent that there is a further need to provide a method for managing such a building in terms of energy aspects.

### SUMMARY OF THE INVENTION

In view of the above, it is an object of the present invention to provide a method for determining an energy load distribution in a system, in particular it is an object of the present invention to provide an improved method for determining an energy load distribution in a system.

These and other objects, which become apparent upon reading the following description, are solved by the subject matter of the independent claims. The dependent claims refer to preferred embodiments of the invention.

In an aspect of the present disclosure, a computer-implemented method for determining an energy load distribution in a system is provided, comprising the steps of: receiving total energy load data of the system, wherein the total energy load data comprises individual energy load data of a plurality of assets; determining at least one energy load peak in the total energy load data; disaggregating the total energy load data into the individual energy load data of the plurality of assets; providing the disaggrated individual energy load data of the plurality of assets for further processing. The disaggregated individual energy load data may be advantageously used to control one or more of the plurality of assets in order to eliminate the energy load peak. This may be advantageous in terms of analyzing the system. This may advantageously provide further insights of the system. This may advantageously allow to develop control a strategy for the plurality of assets.

In an embodiment of the method the determining at least one energy load peak may be based on a pattern recognition algorithm. This may be advantageous in terms of an efficient detection of an energy load peak. This may advantageously prevent the system before further energy load peaks or prevent the detected energy load peak from continuing. The information of the energy peak may be further used to choose new hardware in the system or to change a production schedule. The information of the energy peak may in general give new insights. The isights may be used by an energy manager or an energy management system to make concrete steps (e.g. change production schedule).

In an embodiment of the method the determining at least one energy load peak may be based on a trained machine learning algorithm. This may be advantageous in terms of an efficient detection of an energy load peak. This may advantageously prevent the system before further energy load peaks or prevent the detected energy load peak from continuing.

In an embodiment of the method, the disaggregating the total energy load data may comprise an estimation algorithm. This may be advantageous in case of a lack of individual energy load data of one or more assets.

In an embodiment of the method, the disaggregating the total energy load data may comprise receiving one or more individual energy loads of the plurality of assets by means of measuring device. This may be advantageous in terms of accuracy and quality of the determined disaggregated energy load data.

In an embodiment of the method, the method may further comprise providing a track record of the plurality of assets, wherein the track record is based on the disaggrateted individual energy load data of the plurality of assets. This may be advantageous in terms of user friendliness and analyzing capabilities.

In an embodiment of the method, the method may further comprise tagging the plurality of assets into controllable assets and non-controllable assets. This may be advantageous as it further provides the possibility to control the controllable assets. This may be advantageous in terms of efficiency, reaction speed and automation capabilities.

In an embodiment of the method, the plurality of assets may comprise one or more of the following: heater, EV charger, battery, HVAC (Heating, ventilation, and air conditioning device).

A further aspect of the present disclosure relates to a use of disaggrateted individual energy load data of a plurality of assets received by a method as described above in an in energy management system.

A further aspect of the present disclosure relates to a use of disaggrateted individual energy load data of a plurality of assets received by a method as described above on a graphical user interface.

A further aspect of the present disclosure relates to a data processing device comprising means for carrying out the method as described above.

A further aspect of the present disclosure relates to a computer program product comprising instructions which, when the program is executed by a computer, cause the computer to carry out the method as described above.

A last aspect of the present disclosure relates to a computer-readable medium comprising instructions which, when executed by a computer, cause the computer to carry out the method as described above.

### DEFINITIONS

The term energy load distribution has to be understood broadly and relates to one or more individual energy loads of one or more assets overtime. Preferably the energy load distribution comprises individual energy loads of a plurality of assets. The energy load distribution may be described in tables or figures. The energy load distribution may comprise data values relating to energy load consumption and corresponding time. The time may relate to seconds, hours, days, weeks, months and/or years. The term energy load has to be understood broadly and relates to an energy load consumption or power of an asset. The energy load may preferably be expressed in Watt. The energy or power may stem from one or more energy sources. The energy source may comprise electrical energy, heat energy and/or mechanical energy.

The term system has to be understood broadly and relates to any entity comprising one or more assets, wherein the assets consume electric energy. Preferably the system may be a resendential house, a plant, an office building. The system may comprise subsystems, for example plant building 1 and plant building 2.

The term asset has to be understood broadly and relates to any elerctric energy consuming entity associated to a system. The asset may comprise a light in the building, a heater, a HVAC, an EV charger. The term asset is not limited to the given examples.

The term total energy load data has to be understood broadly and relates in particular essentially to the whole energy load consumption of the system. E.g. the total energy load data is obtained by the overall electricity meter for the building, wherein the electricity meter may be provided by the electricity provider by means of an interface from the overall electricity meter. The total energy load data is made up out of the plurality of energy consumers, i. e. assets. The total energy load data comprises at least an energy load value and a time value, preferably an energy value curve over the time. The total energy load data may be expressed in numbers, tables, figures or the like. The total energy load data may be received from energy management system for the respective system by means of an interface.

The term individual energy load data is to be understood broadly and relates preferably to an single energy load consumption of an asset.

The term energy load peak is to be understood broadly and relates preferably to the highest power consumed over a time period.

The term disaggregated individual energy load data of the plurality of assets has to be understood broadly and relates to one or more single energy load consumptions of one or more corresponding assets. In other words, the disaggregated individual energy load data relate to a distribution of the total energy load data to the single assets, e.g. 30% energy load is consumed by a heater, 20% energy load is consumed by a light and 50% energy load is consumed by an EV charger at the energy load peak on 11:13 am on Tuesday.

The term pattern recognition algorithm has to be understood broadly and may relate to any pattern analyzing algorithm configured to determine an energy load peak in the total energy load data. The pattern recognition algorithm may comprise a classification algorithm, artificial intelligence algorithm, a machine learning algorithm. The term pattern recognition algorithm preferably relates to a technique that automatically recognizes certain patterns and regularities in total energy load data.

The term machine learning algorithm has to be understood broadly and may relate preferably to a tranined machine learning model. The machine learning model may be trained based on labeled data using, for example, historical energy demand logs of a building. The machine learning algorithm preferably may comprise decision trees, naive bayes classifications, nearest neighbors, neural networks, convolutional neural networks, generative adversarial networks, support vector machines, linear regression, logistic regression, random forest and/or gradient boosting algorithms.

The term estimation algorithm is to be understood broadly and may relate to an algorithm configured to estimate based on information of one or more assets in the system and/or some measured individual energy loads of the one or more assets and the total energy load data the individual energy load of one asset or the individual energy loads of a plurality of assets. The estimation algorithm may be a disaggregation algorithm. Such a disaggregation algorithm may work as follows: First, all individual assets may be identified within the system (e.g. a building: fridge, washing machines, monitors etc.) Then, the energy consumption of all assets as well as the entire building may be collected for a longer time (e.g., 1 year) frequently (e.g., every second). This data may be used to train an Al model (in the training phase). Then, the algorithm may extract relevant so-called features or characteristics from the collected data. Examples for these features may be power usage patterns, frequency spectra, voltage fluctuations, time of the day etc..

With the historical data and the extracted features, an ML model may be trained to learn to classify and identify the assets that are responsible for specific energy patterns. Finally, in the disaggregation process phase, the current total energy demand may be taken, investigated for specific featres and characteristics and the ML model may predict the disaggregation into the load distributions of the individual assets.

The term measuring device is to be understood broadly and relates to any device configured to measure the energy load consumption of an asset. The measuring device may be a electricity meter, shunt resistance or the like. The measuring device may comprise an interface for transmitting the measured value to another entity for example a central processing unit.

The term track record is to be understood broadly and relates to the disaggregated individual load data of the plurality of assets over time. The track record may be presented on a screen for further analysis. The track record may comprise figures, table, energy load values.

The term controllable asset has to be understood broadly and relates to an asset that can be controlled regarding its energy load consumption. A controllable asset may comprise an EV charger. A user may decide in dependency of the disaggregated individual energy load data of the plurality of assets to start the charging of an electrical vehicle by means of the EV charger in the late evening. For some assets, the electrical load can, at least to some extent, be dynamically controlled by an external system, e.g. energy management system. EV-chargers can be turned on and off, certain EV-chargers even allow for a continuous control, i.e., the charging power can take any value within a minimum and a maximum charge rate. HVAC systems also may offer certain flexibilities. For example, the power provided to heating or cooling systems can be dynamically adjusted dependent on the temperature in the room. On the contrary, there are assets which cannot be controlled externally, such as a traditionally electric heating system which can only be controlled manually.

The term non-controllable asset has to be understood broadly and relates to an asset that normally cannot be controlled regarding its energy load consumption. A non-controllable asset may comprise a safety device, e.g. a fire alarm device, which has to be permanently active. Tagging the assets in controllable and un-controllable assets may advantageously increase an efficiency of the method. The information may allow a user or a superior control to switch of an asset in dependency of the disaggregated individual load data.

The term energy management system is to be understood broadly and relates to any software used to analyze, control, or predict the energy behavior of a system. The energy management system may provide one or more of the following data: total energy load data, one or more measured individual energy loads of one or more assets.

Units and/or devices according to one or more example embodiments may be implemented using hardware, software, and/or a combination thereof. For example, hardware devices may be implemented using processing circuitry such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, or any other device capable of responding to and executing instructions in a defined manner.

Units or devices may include one or more interface circuits. In some examples, the interface circuits may include wired or wireless interfaces that are connected to a local area network (LAN), the Internet, a wide area network (WAN), or combinations thereof. The functionality of any given device or unit of the present disclosure may be distributed among multiple units or devices that are connected via interface circuits.

Units and/or devices according to one or more example embodiments may also include one or more storage devices. The one or more storage devices may be tangible or non-transitory computer-readable storage media, such as random access memory (RAM), read only memory (ROM), a permanent mass storage device (such as a disk drive), solid state (e.g., NAND flash) device, and/or any other like data storage mechanism capable of storing and recording data. The one or more storage devices may be configured to store computer programs, program code, instructions, or some combination thereof.

Any disclosure and embodiments described herein relate to the methods, the systems, the devices, the computer program element lined out above and vice versa. Advantageously, the benefits provided by any of the embodiments and examples equally apply to all other embodiments and examples and vice versa.

As used herein "determining" also includes "initiating or causing to determine", "generating" also includes "initiating or causing to generate" and "providing" also includes "initiating or causing to determine, generate, select, send or receive". "initiating or causing to perform an action" includes any processing signal that triggers a computing device to perform the respective action.

### BRIEF DESCRIPTION OF THE DRAWINGS

In the following, the present disclosure is described exemplarily with reference to the enclosed figures, in which
- **Figure 1**: shows a flow diagram of an example method for determining an energy load distribution in a system;
- **Figure 2**: shows the use of an example method for determining an energy load distribution in combination with an energy management system;
- **Figure 3**: shows an example data processing device comprising means for carrying out the method described above;
- **Figure 4**: shows an exemplary graph of a total energy load of a system;
- **Figure 5**: shows an exemplary graph of disaggrated individual energy load data of the plurality of assets;
- **Figure 6**: shows an exemplary graph of a track record of a plurality of assets

### DETAILED DESCRIPTION OF EMBODIMENTS

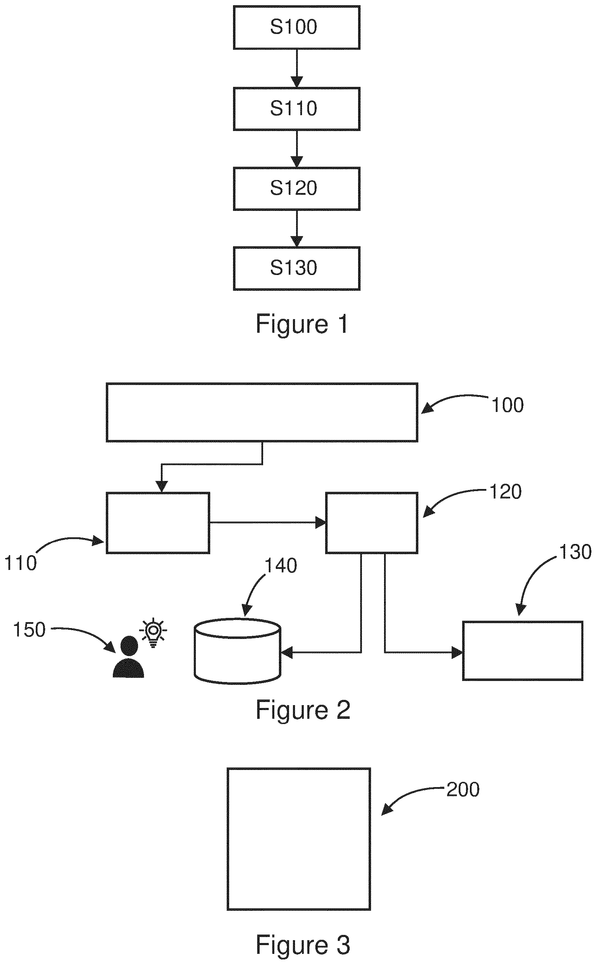

Figure 1 shows a flow diagram of an example method for determining an energy load distribution in a system.

Step S 100 comprises receiving total energy load data of a system, wherein the total energy load data comprises individual energy load data of a plurality of assets. The total energy load data may be received from a energy management system. The total energy load data may be received from an interface of a electricity metering device, wherein the electricity metering device measures the total energy load of the system. The system may be a office building. Alternatively the system may be a plant building, a residential house or the like. The total energy load data may comprise in the following example as plurality of assets a freezer, a EV charger and a heater.

Step S110 comprises determining at least one energy load peak in the total energy load data. The determining the at least one energy load peak may be based on a pattern recognition algorithm. In the following example, the pattern recognition algorithm is based on a machine learning algorithm. The machine learning algorithm may be trained with labeled historical log data of the total energy data the system.

Once an energy load peak is determined, step S120 may be initiated. Alternatively step S120 may be carried out continuously. Step S120 comprises desegregating the the total energy load data into the individual energy load data of the plurality of assets. The desegregating may be based on estimation algorithm. The desegregating may comprise receiving one or more individual measured loads from one or more assets. It should be noted that a combination of an estimation of the individual energy loads and a measuring of the individual energy loads is comprised by the method. In the present example, the individual load of the freezer is determined by an electricity measuring device arranged at the freezer, wherein the electricity measuring device comprises further an interface configured to transmit the individual load data to a data processing device carrying out the method described herein. The individual energy loads of the other assets, i.e. heater and EV charger, are determined by the estimation algorithm based on total energy data.

Step S130 comprises providing the disaggregated individual energy load data of the plurality of assets for further processing. The disaggregated individual energy load data may be presented on a screen for further analyzing. The disaggregated individual energy load data may be used to control the one or more controllable assets. In this example, the EV charger may be switched off in order to read used the energy load peak. The disaggregated individual energy load data may serve for a continuous control of the behavior of the one or more assets or for a future planning of the control of the one or more assets. It should be noted that described method runs automatically and the disaggregated individual energy load data may further be used e.g. in an automatically running energy managements system for automatically controlling the plurality of assets of the system.

The method may further comprise providing a track record of the plurality of assets, wherein the track record is based on the disaggregated individual energy load data of the plurality of assets. The method may further comprise tagging the plurality of assets into controllable assets and controllable assets. This may be advantageous as it increases the efficiency of the energy management system.

Figure 2 shows the use of an example method for determining an energy load distribution in combination with an energy management system 100.

The energy management system 100 continuously provides total energy load data of the system. The total energy load data is continuously searched for energy load peaks by a determining unit 110. Once a peak is detected by the determining unit 110, the disaggregating unit 120 disaggregates the total energy load data into the individual energy load data of the plurality of assets. The disaggregated individual energy load data of the plurality of assets is then provided for further processing. The further processing may comprise derivation of control data 130 from the disaggregated individual energy load data. The further processing may further comprise the transmission of the disaggregated individual energy load data to a statistic unit 140 configured to analyze the disaggregated individual energy data in order to provide further insights to a user 150.

Figure 3 shows an example data processing device 200 comprising means for carrying out the method described above. The means may comprise a central processing unit, a desktop pc, a workstation, a cloud application, a smartphone. The means may comprise one or more interfaces for data transmission.

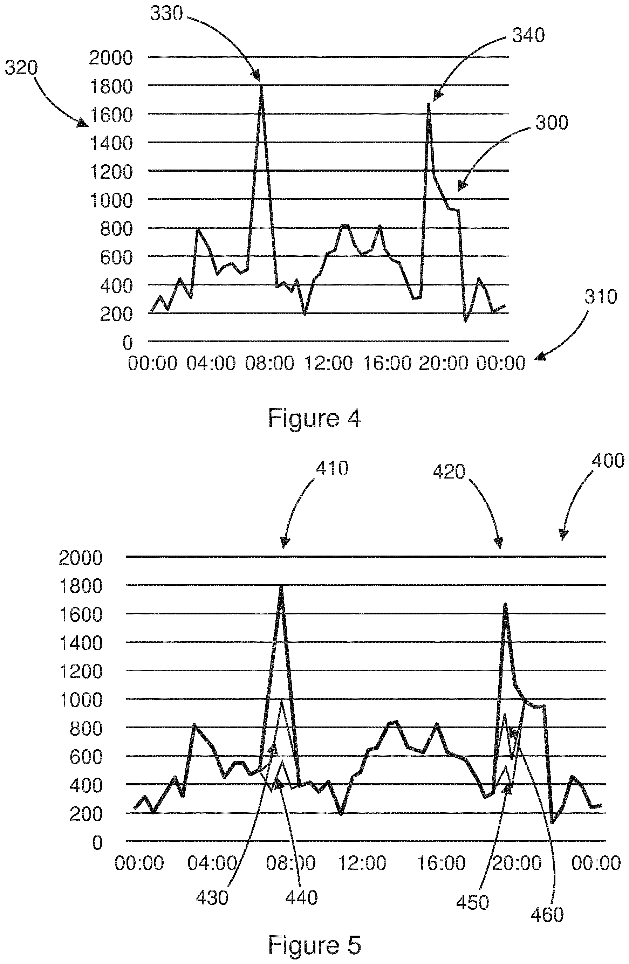

Figure 4 shows an exemplary graph 300 of total energy load of a system. The horizontal axis 310 shows the time and the vertical axis 320 shows the total energy load of all assets. The graph 300 comprises two energy load peaks 330 and 340.

Figure 5 shows an exemplary graph 400 of disaggrated individual energy load data of the plurality of assets. The two peaks 410 and 420 of the total energy load of the exemplary curve 400 are disaggregated into the individual energy loads 430, 440, 450 and 460.

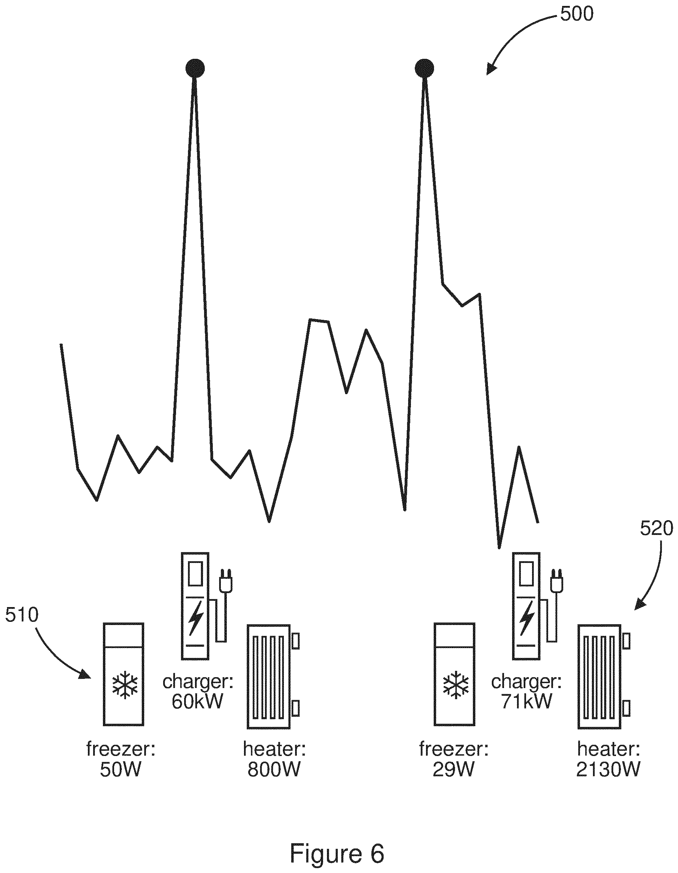

Figure 6 shows an exemplary graph 500 of a track record of the plurality of assets 510 and 520. As can be seen from the figure, the assets comprise a freezer, a charger and a heater, wherein each of them is associated with their respective individual load.

In the following, a summary of the main effects and main advantages of the present disclosure is provided:

The maximum energy load peak, i.e., the highest power consumed over a given period, may be a main contributor to an energy bill. However, due to the large number of individual energy loads and their dynamic characteristic, it is typically not possible to understand which assets contribute how much to energy load peaks over time. The solution described in this invention is a method to automatically recognize energy load peaks in the total energy load data and to automatically determining a breakdown of the load contribution of each individual asset to the energy load peak. These insights may enable a user to understand the reasons for the peak and enables the user to take concrete actions. These individual energy loads may be used to control the individual assets in order reduce energy load peaks.

The total energy load data or total energy load demand profile of commercial, residential, and industrial buildings consists of many different individual energy loads. These individual energy loads can be associated to various assets such as HVAC systems, EV-chargers, or similar. More often than not, the energy load demand profile is not flat, but instead may have a dynamic behavior so that it varies over time and occasionally contains total energy load peaks.

The total energy cost does not only depend on the total energy consumed, but also on the maximum peak, i.e., the highest power consumed over a given period, is a significant factor. Thus, it is from high interest to understand which assets contribute to a peak and by how much. However, due to the large number of individual energy loads and their dynamic characteristic over time, this is typically not possible through manual inspection. In other words, an automated computer implemented method is necessary to determine the individual energy loads of the plurality of assets in order to flatten the actual energy load curve and to avoid future peaks.

The proposed method automatically recognizes peaks in the energy demand and automatically determines a breakdown of the load contribution of each individual asset to the peak. Additionally, the method may highlight loads which are flexible, i.e., loads for which (at least some) control is feasible.

The insights from the breakdown of the peak load into its individual assets is beneficial for the controlling the system, e.g. a building with its assets. These insights enable further a user to understand the reasons for the peak and thus brings the user into a position to take concrete actions. For example, if it is observed that most peaks are caused by intense use of EV-chargers, the user could schedule the charging processes to more distributed throughout the day and / or consider purchasing a battery energy storage system. Alternatively, the insigths may be automatically processed to generate control commands for assets.

The idea relates to a method that automatically recognizes peaks in the total energy demand and automatically determines a breakdown of the total load demand into the load demand of the individual assets. The method can be built on top of an existing energy management and / or energy monitoring system. The method may comprise one or more of the following steps:
Setup:
Step 1: Tag assets as "controllable" for which the load is (at least to some degree) controllable.
Step 2: Connect an energy disaggregation module to the energy management / monitoring system.
Step 3: Connect a pattern recognition system to the energy management / monitoring system. Repeat:
   Step 4: The pattern recognition system continuously searches for "peak-patterns" in the total load.
   Step 5: Every time a peak-pattern is found, the energy disaggregation module decomposes the total load into individual energy loads and assigns these to physical assets (electric heater, air-conditioning, EV-charger, ...).
   Step 6: The system keeps a track-record of all assets and their contributions to different peaks over time. Out of this track-record, two things are calculated:
      a.A continuous average statistic is calculated for each physical asset.
      b.The fraction of the total load contributed by "controllable" loads.

In the following the individual steps are explained in more detail. Number values and asset examples have only exemplary character.

### Step 1 (tag assets as "controllable"):

For some assets, the electrical load can, at least to some extent, be dynamically controlled by an external system:
EV-chargers can be turned on and off, certain EV-chargers even allow for a continuous control, i.e., the charging power can take any value within a minimum and a maximum charge rate. HVAC systems also offer certain flexibilities. For example, the power provided to heating or cooling systems can be dynamically adjusted dependent on the temperature in the room.

Assets that fall into this category are labelled as "controllable". On the contrary, there are assets which cannot be controlled externally, such as a traditionally electric heating system which can only be controlled manually.

### Step 2 (energy disaggregation):

Energy disaggregation is a technique that takes the total energy demand signal as an input and separates it into individual energy signals for each asset. If the energy management / monitoring system already performs submetering of some electrical loads of the building, the energy disaggregation can be combined with the available submetering data to achieve a complete and more accurate disaggregation. Finally, if all individual energy loads are monitored, the invented method does not require energy disaggregation.

### Step 3 & 4 (pattern recognition):

Pattern recognition is a technique to automatically recognize certain patterns and regularities in data. In this invented method, pattern recognition is used to recognize peak patterns in the energy demand data. Pattern recognition systems are often based on machine learning, they can be trained based on labelled data using, e.g., historical energy demand logs of the building.

### Step 5 (energy disaggregation):

Every time a peak pattern is recognized in Step 4, the total energy load is disaggregated into its individual energy loads, using the energy disaggregation module introduced in Step 2. Energy disaggregation is applied to the accumulated energy profile over the time period for which the pattern recognition system has recognized a peak. The combination of peak pattern detection and energy disaggregation provides the insight that for example charging of electric vehicles are the main contributor to the peak on a day. If the user or energy management system observes this more frequently, the user or energy management system is now aware of the causes of the peak, and thus can initiate concrete preventive actions (e.g. derive control commands for the assets).

### Step 6 (Keeping a track record):

Finally, a track-record of all detected peaks (Step 4) along with the respective disaggregated energy profiles to individual assets (Step 5) is kept in a data base. This track-record can be used to provide illustrations and statistics over longer periods of time to the user (e.g., an energy manager).

The method can be implemented on top of an existing energy management / monitoring system. With this functionality, the energy management system would be capable of automatically providing the user, i.e., the energy manager, with insights about the following questions: Can a single or a small number of assets be identified as main contributors to the peak? Or is it rather that all assets contribute almost equally to the peak? How often and how regular do peaks occur? How much of the peak can be controlled? Is every peak caused by a similar set of assets?

### REFERENCE SIGNS

- S100: receiving total energy load data of the system
- S110: determining at least one energy load peak
- S120: dissagregating the total energy load data
- S130: providing the disaggregated total energy load data

- 100: energy management system
- 110: determining unit
- 120: disaggregating unit
- 130: control data
- 140: analyzing unit
- 150: user
- 200: data processing device
- 300: total energy load graph
- 310: horizontal axis
- 320: vertical axis
- 330, 340: energy load peaks
- 400: total energy load graph
- 410, 420: energy load peaks
- 430, 440, 450, 450: individual energy loads
- 500: track record graph
- 510, 520: assets

## Claims

1. Computer-implemented method for determining an energy load distribution in a system, comprising:
receiving total energy load data of the system, wherein the total energy load data comprises individual energy load data of a plurality of assets;
determining at least one energy load peak in the total energy load data;
disaggregating the total energy load data into the individual energy load data of the plurality of assets;
providing the disaggrateted individual energy load data of the plurality of assets for further processing.

2. The method according to claim 1, wherein the determining at least one energy load peak is based on a pattern recognition algorithm.

3. The method according to claim claim 1 or 2, wherein the determining at least one energy load peak is based on a trained machine learning algorithm.

4. The method according to any one of the preceding claims, wherein the disaggregating the total energy load data comprises an estimation algorithm.

5. The method according to any one of the preceding claims, wherein the disaggregating the total energy load data comprises receiving one or more individual energy loads of the plurality of assets by means of a measuring device.

6. The method according to any one of the preceding claims, further comprising providing a track record of the plurality of assets, wherein the track record is based on the disaggrateted individual energy load data of the plurality of assets.

7. The method according to any one of the preceding claims, further comprising tagging the plurality of assets into controllable assets and non-controllable assets.

8. The method according to any one of the preceding claims, wherein the plurality of assets comprises one or more of the following: heater, EV charger, battery, hvac.

9. Use of disaggrateted individual energy load data of a plurality of assets received by a method according to any of the claims 1 to 8 in an in energy management system.

10. Use of disaggrateted individual energy load data of a plurality of assets received by a method according to any of the claims 1 to 8 on a graphical user interface.

11. A data processing device comprising means for carrying out the method according to any of the claims 1 to 8.

12. A computer program product comprising instructions which, when the program is executed by a computer, cause the computer to carry out the method according to any one of the claims 1 to 8.

13. A computer-readable medium comprising instructions which, when executed by a computer, cause the computer to carry out the method according to any of the claims 1 to 8.
